(19) **Europäisches Patentamt / European Patent Office / Office européen des brevets**

(11) **EP 2 830 895 B1**

(12) **FASCICULE DE BREVET EUROPEEN**

(45) Date de publication et mention de la délivrance du brevet:
**25.05.2016 Bulletin 2016/21**

(21) Numéro de dépôt: **13712861.7**

(22) Date de dépôt: **27.02.2013**

(51) Int Cl.:
**B60C 23/06** (2006.01)

(86) Numéro de dépôt international:
**PCT/FR2013/050405**

(87) Numéro de publication internationale:
**WO 2013/144469 (03.10.2013 Gazette 2013/40)**

(54) **PROCEDE D'ESTIMATION DE LA RESISTANCE AU ROULEMENT DE ROUES EQUIPANT UN TRAIN D'UN VEHICULE**

VERFAHREN ZUR ABSCHÄTZUNG DES ROLLWIDERSTANDES EINES KRAFTFAHRZEUGSRADS

METHOD FOR ESTIMATING THE ROLLING RESISTANCE OF A VEHICLE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2012 FR 1252724**

(43) Date de publication de la demande:
**04.02.2015 Bulletin 2015/06**

(73) Titulaire: **Renault S.A.S.**
**92100 Boulogne-Billancourt (FR)**

(72) Inventeurs:
- **PITA-GIL, Guillermo**
  **F-Paris 75017 (FR)**
- **EL TANNOURY, Charbel**
  **F-78000 Versailles (FR)**
- **MOUSSAOUI, Saïd**
  **F-44321 Nantes Cedex 3 (FR)**
- **PLESTAN, Franck**
  **F-44321 Nantes (FR)**

(56) Documents cités:
**EP-A1- 0 699 546        EP-A2- 1 037 030**
**DE-A1-102010 029 154**

EP 2 830 895 B1

**Description**

La présente invention se rapporte à la détection et à la surveillance de l'état de gonflage du pneumatique d'une roue d'un véhicule, et plus particulièrement d'un véhicule automobile.

Il est en effet crucial pour la sécurité des passagers que tout véhicule dispose de roues dont la pression de gonflage soit suffisante pour assurer un comportement adéquat du véhicule quant à sa stabilité directionnelle, sa maniabilité et son confort. Il est par ailleurs connu qu'une pression insuffisante des pneumatiques génère une surconsommation.

Une information importante liée au contact entre la roue et la chaussée est la force de résistance au roulement dont la variation est fortement indicative de l'état du véhicule en termes de charge et de pression de gonflage des pneumatiques. Une autre alternative est la connaissance du rayon effectif des roues qui est également lié à la pression du pneumatique.

Afin d'améliorer les stratégies de commande du véhicule et les outils de diagnostic des pneumatiques, la présente invention se propose d'estimer la résistance au roulement d'une roue, ou le rayon effectif des roues, et d'en déduire l'état de gonflage des pneumatiques.

Il est connu, par le document JP2010/0249527, une estimation de la résistance au roulement d'un pneumatique pris isolément, dans le but de déterminer ses caractéristiques. Cette estimation est basée sur un modèle d'éléments finis, en statique, et ne s'applique pas à un véhicule roulant sur une chaussée. EP 0 699 546 A1 divulgue de même une estimation de la résistance au roulement d'un pneumatique.

Il est également connu, par les documents US4489598 et US2008/0115563, des bancs de mesure équipés de capteurs permettant de mesurer les forces de résistances tangentielles au roulement. Un tel équipement ne permet pas une mesure de la résistance en roulement lors de l'utilisation du véhicule, et par conséquent, ne permet pas une surveillance de la pression des pneumatiques en roulage.

La présente invention se propose de déterminer, en temps réel, la résistance au roulement d'une roue d'un véhicule se déplaçant sur une chaussée, ou le rayon effectif de ladite roue, à partir de données déjà présentes sur la plupart des véhicules, notamment les véhicules équipés d'un dispositif ABS (AntiBlockierSystem), par un procédé robuste et fiable. La présente invention vise également l'estimation et la surveillance de la pression d'un pneumatique équipant la roue d'un véhicule par l'intermédiaire de l'estimation de la résistance au roulement de ladite roue, ou par l'estimation du rayon effectif de roue.

La présente invention est atteinte à l'aide d'une Méthode d'estimation de la résistance au roulement d'un train de roues d'un véhicule en mouvement et des rayons effectifs des roues dudit train, ledit véhicule étant muni d'au moins deux roues équipées de pneumatiques, la méthode comprenant :

- la mesure ou l'estimation de la valeur de la vitesse angulaire $\Omega$ de rotation de chacune des roues du train,

- la mesure ou l'estimation de la valeur du couple moteur $\tau$ appliqué au train de roues,

caractérisée par le fait que la méthode utilise un observateur de la dynamique de la roue basé sur la théorie des modes glissants dont les signaux d'entrée sont la valeur de la vitesse angulaire $\Omega$ de chaque roue du train ainsi que la valeur du couple moteur $\tau$ appliqué au train de roues.

Une telle méthode permet ainsi, à partir de deux signaux estimés ou mesurés, d'obtenir une estimation de la résistance au roulement d'un train du véhicule, par l'utilisation d'un observateur fondé sur la théorie des modes glissants, qui permet notamment de conférer à cette méthode une certaine robustesse face aux incertitudes et perturbations.

Par ailleurs, cette théorie permet également une convergence rapide.

La présente invention vise également un véhicule automobile comportant un dispositif de surveillance de la pression des pneumatiques équipant les roues du véhicule, utilisant la variation de la résistance au roulement desdites roues comme indicateur de la variation de pression, la résistance au roulement étant estimée, en temps réel, à l'aide d'une méthode selon les caractéristiques précédemment évoquées.

Avantageusement, le véhicule comporte des moyens d'enregistrement et de comparaison de la résistance au roulement des roues du véhicule.

La présente invention sera mieux comprise à l'aide de la description qui va suivre, en référence aux figures annexées, parmi lesquelles :

la figure 1 est une vue schématique d'une roue et des forces s'appliquant sur cette roue dans un véhicule en mouvement,

les figures 2 à 4 montrent le résultat de l'application de la méthode selon le premier mode de mise en oeuvre de l'invention sur différents signaux expérimentaux,

les figures 5 à 7 montrent le résultat de l'application de la méthode selon le second mode de mise en oeuvre de l'invention sur différents signaux réels.

La présente invention propose l'estimation de la force de résistance au roulement utilisant seulement les informations de couple moteur et vitesses angulaires fournies avantageusement par les codeurs ABS.

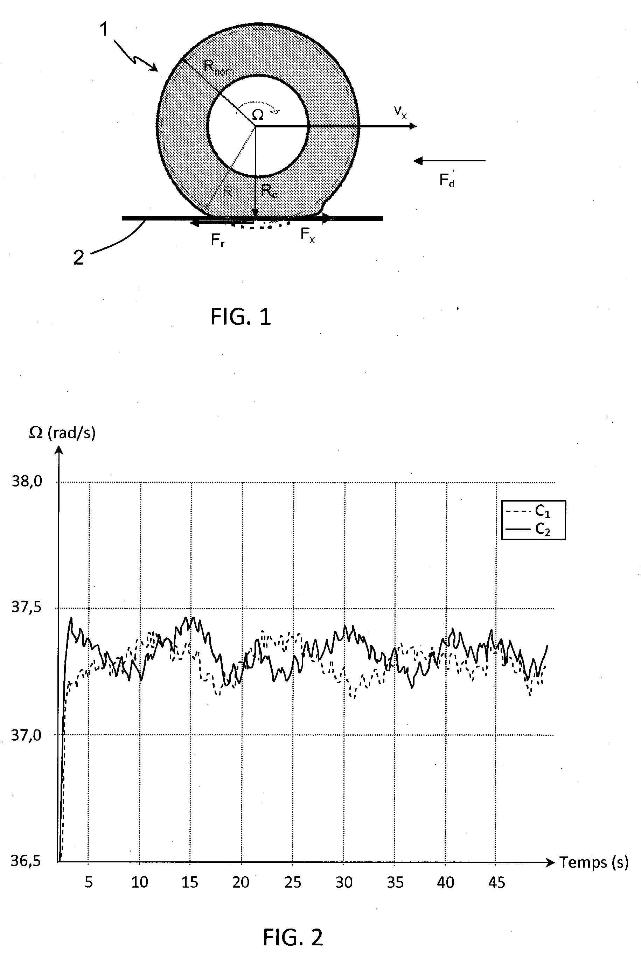

La figure 1 représente l'état d'une roue 1 équipant un véhicule (non représenté) reposant sur un sol 2. Une telle roue n'est donc pas prise isolément, et se trouve ainsi chargée approximativement du poids total du véhicule divisé par le nombre de roues assurant la liaison entre le véhicule et le sol. Dès lors, le rayon des roues équipées de pneumatiques diffère du rayon nominal, par l'effet du poids du véhicule, le rayon nominal $R_{nom}$ correspondant au diamètre extérieur des roues prises séparément, hors du montage sur véhicule.

On définit ainsi un rayon sous charge $R_c$ qui correspond à la distance entre l'axe de rotation de la roue et le sol, ainsi qu'un rayon dynamique R qui correspond à la distance parcourue pour un tour de roue divisée par $2\pi$.

Selon une première mise en oeuvre de l'invention, on considérera un modèle représentant la dynamique d'une roue, basé sur l'application de la deuxième loi de Newton aux forces agissant sur la roue pendant une phase d'accélération. Ceci permet d'établir les équations principales des dynamiques longitudinale et rotationnelle à la roue :

$$J\dot{\Omega} = \tau - RF_x - C_f\Omega,$$

$$M\dot{v}_x = F_x - F_d - F_r,$$

où $\Omega$ est la vitesse angulaire de roue, R le rayon dynamique, $v_x$ la vitesse linéaire du véhicule, $C_f$ le coefficient de frottement visqueux de la roue, $J$ et $M$ respectivement l'inertie de la roue et la masse d'un quart de voiture comprenant la carrosserie et la roue, étant supposé, selon l'exemple proposé, que le véhicule dispose de quatre roues en contact avec le sol.

En plus du couple $\tau$ à la roue, les forces principales agissant sur la roue sont la force de traction $F_x$, la force aérodynamique $F_d$ et la résistance au roulement $F_r$, telles que représentées figure 1, et qui sont données par les formules suivantes :

$$F_d(v_x) = \frac{1}{2}\rho A_d C_d v_x^2,$$

$$F_x(\lambda) = Mg\mu(\lambda),$$

où $C_d$ est le coefficient de pénétration dans l'air, $p$ la masse volumique de l'air et $A_d$ la surface de la zone frontale du véhicule. Le paramètre $\mu(\lambda)$ est le coefficient d'adhérence de la roue dépendant du pseudo-glissement $\lambda$ de la roue. Ce coefficient est défini par la relation suivante :

$$\lambda = \frac{R\Omega - v_x}{R\Omega} = 1 - \frac{v_x}{R\Omega}.$$

La relation entre $\mu$ et $\lambda$ est approximée par la fonction suivante :

$$\mu(\lambda) = 2\mu_0 \frac{\lambda_0\lambda}{\lambda_0^2 + \lambda^2},$$

où $\lambda_0$ est le pseudo-glissement optimal, correspondant à l'adhérence maximale $\mu(\lambda_0) = \mu_0$. Cette relation est plus précise et plus proche de la réalité qu'une variation linéaire entre la force de traction $F_x$ et le pseudo-glissement $\lambda$, tel qu'il est fréquemment rencontré.

Le rayon effectif R est supposé constant et la résistance au roulement, dont l'estimation est recherchée, est supposée présenter une variation bornée selon

$$\dot{F}_r = \eta, \quad \text{avec } \eta \text{ borné selon la relation } |\eta| < |\eta_0|$$

avec $\eta$ borné selon la relation $|\eta| < |\eta_0|$.

Selon l'invention, un observateur utilisant uniquement la valeur mesurée de la vitesse angulaire de la roue et le couple appliqué sur ladite roue est proposé. Une telle solution permet d'estimer la vitesse du véhicule et la résistance au roulement en supposant un rayon constant.

L'observateur fondé sur la théorie des modes glissants d'ordre supérieur doit être du troisième ordre. Les caractéristiques principales de ce genre d'observateurs sont la robustesse par rapport aux incertitudes et perturbations, et la convergence en temps fini. En outre, ils sont applicables à une classe très large de systèmes observables.

Ce choix de stratégie d'observation a été fait parce que la dynamique de la résistance au roulement n'est pas connue a priori et peut être considérée comme une incertitude bornée.

Afin de concevoir l'estimateur, un modèle représentant la dynamique de la roue est nécessaire.

Les valeurs que l'on souhaite estimer sont donc la vitesse de rotation angulaire des roues $\Omega$, la vitesse d'avancement $v_x$, ainsi que la résistance au roulement $F_r$.

La représentation d'état se note alors $x = [x_1\ x_2\ x_3]^T = [\Omega\ v_x\ F_r]^T$ avec l'entrée de commande $u = \tau$, ce qui permet alors, compte tenu des équations précédentes, d'exprimer $\dot{x}$ par la relation :

$$\dot{x} = \begin{bmatrix} -\dfrac{1}{J}\left(RF_x(x) + C_f x_1\right) \\ \dfrac{1}{M}\left(F_x(x) - F_d(x) - x_3\right) \\ \eta \end{bmatrix} + \begin{bmatrix} \dfrac{1}{J} \\ 0 \\ 0 \end{bmatrix} u.$$

Par ailleurs, selon l'invention, la valeur de la vitesse de rotation $\Omega$ est connue, de sorte que le terme $-\dfrac{C_f}{J}x_1 + \dfrac{1}{J}u$ ne dépend que de variables connues. Or on sait que les propriétés d'observabilité ne sont pas modifiées par la prise en compte ou non de ce terme, qui sera donc ignoré par la suite.

De plus, on choisit pour l'observateur, la valeur $\eta_{obs} = 0$, dès lors que cette dynamique de la force de résistance au roulement est inconnue et additive pour l'observateur. Ainsi, la conception de l'observateur est faite sur le système simplifié :

$$\dot{x} = \begin{bmatrix} -\dfrac{1}{J}RF_x(x) \\ \dfrac{1}{M}\left(F_x(x) - F_d(x) - x_3\right) \\ 0 \end{bmatrix} = f_{id}(x).$$

Compte tenu des équations définies précédemment, la force $F_x(x)$ s'exprime par la relation :

$$F_x = 2\mu_0 \frac{\lambda_0\left(1 - \dfrac{x_2}{Rx_1}\right)}{\lambda_0^2 + \left(1 - \dfrac{x_2}{Rx_1}\right)^2} Mg.$$

On définit ensuite la transformation suivante :

$$\psi(x) = \begin{bmatrix} y \\ \dot{y} \\ \ddot{y} \end{bmatrix} = \begin{bmatrix} x_1 \\ -\dfrac{1}{J} RF_x(x) \\ -\dfrac{1}{J}\left[\dfrac{dF_x}{dx}\right]^T \dot{x} \end{bmatrix}$$

avec $y = \Omega = x_1$ la sortie mesurée.

Si le déterminant du jacobien de cette transformation est différent de zéro, la dynamique des variables d'état estimées s'écrit, selon la technique des modes glissants d'ordre trois :

$$\dot{\hat{x}} = f_{id}(\hat{x}, y) + \chi(y, u) + \left[\frac{\partial \psi}{\partial x}\right]^{-1} \cdot \begin{bmatrix} \gamma_1 \\ \gamma_2 \\ \gamma_3 \end{bmatrix},$$

avec

$$\gamma_1 = 2 \ L^{1/3} \left| y - \hat{x}_1 \right|^{2/3} sign(y - \hat{x}_1),$$

$$\gamma_2 = 1.5 \ L^{1/2} \left| \gamma_1 \right|^{1/2} sign(\gamma_1),$$

$$\gamma_3 = 1.1 \ L \ sign(\gamma_2),$$

où $L$ est un paramètre de réglage de l'observateur. La prise en compte du signe permet que les écarts entre les variables estimées et mesurées tendent vers zéro.

Afin de vérifier si l'observateur proposé présente une convergence et des estimations correctes des variables envisagées qui sont la résistance au roulement et la vitesse longitudinale, des signaux réels de vitesse angulaire et de couple ont été acquis pour deux niveaux de gonflage d'une roue.

Les paramètres de l'observation sont choisis pour être aussi proches que possible des valeurs réelles. Ainsi, les différentes valeurs des paramètres nécessaires sont : $J$ = 1,672 kg.m$^2$, $R$ = 0,305 m, M = 607,5 kg, $A_d$ = 0,815 m$^2$, p = 1,20$_5$ kg.m$^{-3}$ , $g$ = 9,807 m.s$^{-2}$, $C_f$ = 0,08 kg.m$^2$.s$^{-1}$, $C_d$ = 0,3125, $\mu_o$ = 0,9 et $\lambda_o$ = 0,15.

Le paramètre L a été réglé égal à 1.

Les valeurs initiales $\hat{x}(0)$ sont choisies selon

$$\hat{x}(0) = \begin{bmatrix} 15 / 0.29 \\ 15 \\ 74 \end{bmatrix}.$$

Pour cette expérience, il a été choisi une vitesse longitudinale de véhicule égale à 40 km/h. Des signaux de vitesses angulaires des roues et de couple moteur ont été acquis avant et après un dégonflage du pneumatique de 20% par rapport à la pression nominale.

Les figures 2 à 4 illustrent respectivement les estimations de la vitesse angulaire de la roue, de la vitesse longitudinale du véhicule, en fonction du temps de roulage du véhicule ainsi que l'histogramme de la force de résistance au roulement estimée. Pour chacune de ces figures, la représentation en traits pointillés, portant l'indice 1, correspond à la situation de gonflage nominale, tandis que la représentation en traits pleins, portant l'indice 2, correspond à la situation où le pneumatique a subi une perte de pression de 20 %.

Sur la figure 2, les courbes $C_1$ et $C_2$ sont très proches l'une de l'autre en valeur moyenne, et l'écart entre les deux courbes est inférieur à 0,5 %. Les valeurs moyennes sont donc difficilement différentiables, ce qui démontre que l'indication de la vitesse de rotation de la roue n'est pas fortement influencée par l'état de pression du pneumatique.

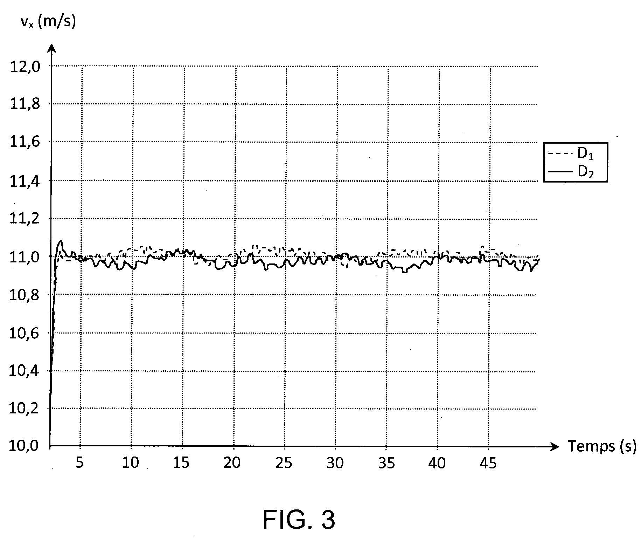

Il en est de même de la figure 3 où la courbe $D_1$ est très voisine de la courbe $D_2$ relatant l'estimation de vitesse après dégonflage du pneumatique, la valeur estimée autour de 11 m/s étant bien conforme à la vitesse de 40 km/h imposée au véhicule.

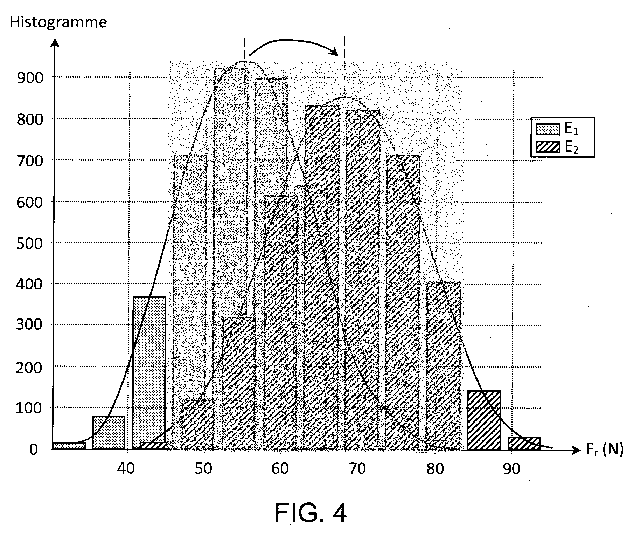

Par contre la figure 4 montre une nette différence entre les histogrammes $E_1$ relatifs à l'estimation de la résistance au roulement avant dégonflage, et $E_2$, relatifs à l'estimation de la résistance au roulement après dégonflage. En représentant les histogrammes sous une forme gaussienne, on note que la valeur maximale pour la courbe $E_1$ est d'environ 55 N, tandis que la valeur maximale pour la courbe $E_2$ est d'environ 68 N, soit un écart supérieur à 20 %, écart pouvant être facilement identifié par des moyens d'enregistrement des données.

Cette nette différence dans les histogrammes de valeur de résistance au roulement, pour une différence de pression de 20 % est observable dans un laps de temps relativement faible, puisque les histogrammes représentés ont été obtenus en 45 secondes de roulage. Ce temps d'observation peut, par ailleurs, être abaissé en diminuant le degré de certitude de l'observation, ou pour une estimation de différence de pression plus importante.

Une telle détection de différence de pression peut alors être communiquée au conducteur par tout dispositif connu : soit un signal sonore ou lumineux, soit une interface spécifique tel un écran de représentation du véhicule au niveau du tableau de bord.

Selon un second mode de mise en oeuvre de l'invention, ce sont les valeurs mesurées des vitesses angulaires des roues ainsi que les couples moteurs qui sont utilisés. Si le véhicule est une automobile à traction, alors l'observateur utilisé est étendu au train avant, en prenant donc en considération un demi-véhicule et deux roues, au lieu d'un quart de véhicule et une roue pour le premier mode de mise en oeuvre. Si le véhicule est à propulsion, c'est le train arrière qui sera considéré.

L'observateur reste fondé sur la théorie des modes glissants d'ordre supérieur, mais utilise alors un modèle à 6 dimensions.

La différence essentielle avec le premier mode de réalisation réside dans la détermination du modèle qui représente alors la dynamique du train.

L'application de la deuxième loi de Newton aux forces agissant sur les roues du train avant pendant une phase d'accélération permet d'établir les équations principales des dynamiques longitudinale et rotationnelle selon :

$$J_l\dot{\Omega}_l = \Gamma_l - R_l F_{xl} - C_f\Omega_l$$

$$J_r\dot{\Omega}_r = \Gamma_r - R_r F_{xr} - C_f\Omega_r$$

$$M_{1/2}\dot{v}_x = F_{xl} + F_{xr} - F_d - F_{rlr}$$

où les indices «l» et « r » identifiant respectivement la roue gauche et la roue droite, $\Omega$ est la vitesse angulaire de roue, R le rayon effectif, $v_x$ la vitesse linéaire du véhicule, $C_f$ le coefficient de frottement visqueux de la roue, J est l'inertie et $M_{1/2}$ la masse de la moitié du véhicule comprenant la carrosserie et le train considéré.

Comme pour la première mise en oeuvre de l'invention, les différentes forces agissant sur les roues du train sont définies par

$$F_d(v_x) = \frac{1}{2}\rho A_d C_d v_x^2,$$

$$F_x(\lambda) = Mg\mu(\lambda),$$

Les équations reliant le coefficient d'adhérence $\mu(\lambda)$ et le pseudo-glissement $\lambda$ sont également celles décrites précédemment.

Les rayons effectifs des roues du train et la résistance au roulement sont supposées inconnus mais présentant des variations bornées, la dérivée de ces variables s'écrit selon la relation :

$$\dot{R}_l = \eta_l, \left| \eta_l \right| < \left| \eta_{0l} \right|,$$

$$\dot{R}_r = \eta_r, \left| \eta_r \right| < \left| \eta_{0r} \right|,$$

$$\dot{F}_{rlr} = \eta_F, \left| \eta_F \right| < \left| \eta_{0F} \right|.$$

Le même type d'observateur que celui décrit précédemment est utilisé, mais il est d'ordre 2. Les valeurs que l'on souhaite alors estimer sont les vitesses de rotation angulaire des roues du train considéré $\Omega_r$ et $\Omega_l$, la résistance au roulement $F_{r/r}$, ainsi que les rayons effectifs des roues $R_r$ et $R_l$. La vitesse d'avancement du véhicule $v_x$ est déduite à partir de la moyenne des vitesses angulaires des roues à l'arrière. La représentation d'état, avec le vecteur d'état x, le vecteur commande u et les mesures y, se note alors :

$$x = \begin{bmatrix} x_1 & x_2 & x_3 & x_4 & x_5 & x_6 \end{bmatrix}^T = \begin{bmatrix} \Omega_l & \Omega_r & v_x & F_{rlr} & R_l & R_r \end{bmatrix}^T,$$

$$u = \begin{bmatrix} u_1 & u_2 \end{bmatrix}^T = \begin{bmatrix} \Gamma_l & \Gamma_r \end{bmatrix}^T, y = \begin{bmatrix} \Omega_l & \Omega_r & v_x \end{bmatrix}^T = \begin{bmatrix} x_1 & x_2 & x_3 \end{bmatrix}^T,$$

soit

$$\dot{x} = \begin{bmatrix} -\dfrac{1}{J_l}\left(x_5 F_{xl}(x) + C_f x_1\right) \\ -\dfrac{1}{J_r}\left(x_6 F_{xr}(x) + C_f x_2\right) \\ \dfrac{1}{M_{1/2}}\left(F_{xl}(x) + F_{xr}(x) - F_d(x) - x_4\right) \\ \eta_l \\ \eta_r \\ \eta_F \end{bmatrix} + \begin{bmatrix} \dfrac{1}{J_l} & 0 \\ 0 & \dfrac{1}{J_r} \\ 0 & 0 \\ 0 & 0 \\ 0 & 0 \\ 0 & 0 \end{bmatrix} u$$

Tout comme pour l'observateur décrit dans le premier mode de mise en oeuvre de l'invention :

- on remplacera les termes $\eta_r, \eta_l, \eta_F$ par 0, en raison du postulat que les incertitudes additives ne changent pas les propriétés d'observabilité du système,

- les termes $-\dfrac{C_f}{J_l}x_1 + \dfrac{1}{J_l}u_1$ et $-\dfrac{C_f}{Jr}x_2 + \dfrac{1}{Jr}u_2$ ne dépendent que de variables connues, et ne modifient donc pas les propriétés d'observabilité.

Le système simplifié de l'observateur s'écrit alors :

$$\dot{x} = \begin{bmatrix} -\dfrac{1}{J_l} x_5 F_{xl}(x) \\ -\dfrac{1}{J_r} x_6 F_{xr}(x) \\ \dfrac{1}{M_{1/2}} (F_{xl}(x) + F_{xr}(x) - F_d(x) - x_4) \\ 0 \\ 0 \\ 0 \end{bmatrix}$$

Par la suite, on définit la transformation suivante :

$$\Psi(x) = \begin{bmatrix} y_1 \\ \dot{y}_1 \\ y_2 \\ \dot{y}_2 \\ y_3 \\ \dot{y}_3 \end{bmatrix}$$

Si le jacobien de cette transformation est différent de zéro, la dynamique des variables d'état estimées s'écrit, selon la technique des modes glissants supérieurs d'ordre 2 :

$$\dot{\hat{x}} = f_r(\hat{x}) + \chi(y,u) + \left[\frac{\delta\Psi}{\partial x}\right]^{-1} \kappa(y,\hat{x})$$

où $\kappa(y,\hat{x})$ est le vecteur de correction selon la technique des modes glissants du second ordre pour chaque mesure, avec :

$$\kappa_1 = 1.5 L_1^{1/2} |y_1 - \hat{x}_1|^{1/2} sign(y_1 - \hat{x}_1)$$

$$\kappa_2 = 1.1 L_1 sign(\kappa_1)$$

$$\kappa_3 = 1.5 L_2^{1/2} |y_2 - \hat{x}_2|^{1/2} sign(y_2 - \hat{x}_2)$$

$$\kappa_4 = 1.1 L_2 sign(\kappa_3)$$

$$\kappa_5 = 1.5 L_3^{1/2} |y_3 - \hat{x}_3|^{1/2} sign(y_3 - \hat{x}_3)$$

$$\kappa_6 = 1.1 L_3 sign(\kappa_5)$$

où $L_1$, $L_2$ et $L_3$ sont des paramètres de réglage de l'observateur.

Afin de vérifier si l'observateur proposé présente une convergence et des estimations correctes des variables envisagées qui sont la résistance au roulement et les rayons effectifs des roues du train avant d'un véhicule à traction, des signaux réels de vitesse angulaire et de couple moteur sur le train avant ont été acquis pour un véhicule roulant aux alentours de 40 km/h, avant et après dégonflage du pneumatique avant gauche de 20 % par rapport à la pression nominale, comme avec le premier modèle.

Les paramètres du modèle sont sensiblement identiques à celle du premier modèle considéré. Ainsi, les différentes valeurs des paramètres nécessaires sont : $J_1 = J_2 = 1,672$ kg.m$^2$, $M_{1/2} = 607,5$ kg, $A_d = 0,815$ m$^2$, $\rho = 1,205$ kg.m$^{-3}$, g = 9,807 m.s$^{-2}$, $C_f = 0$ kg.m$^2$.s$^{-1}$, $C_d = 0,3125$, $\mu_o = 0,9$ et $\lambda_o = 0,15$.

Les paramètres $L_1$, $L_2$ et $L_3$ ont été réglés à 1.

Les valeurs initiales $\hat{x}(0)$ sont choisies selon :

$$\hat{x}(0) = \begin{bmatrix} 16/0.31 \\ 16/0.31 \\ 16 \\ 102.5 \\ 0.305 \\ 0.305 \end{bmatrix}$$

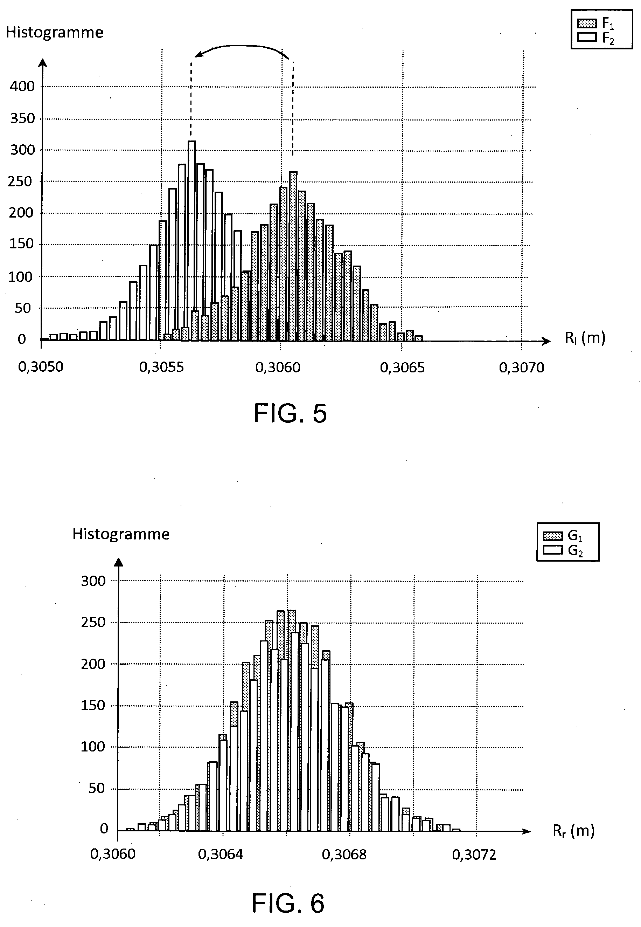

Les figures 5 et 6 donnent les estimations des rayons effectifs respectivement pour les roues gauche et droite, avant et après le dégonflage du pneumatique avant gauche. Les histogrammes grisés, notés $F_1$, montrent les estimations avant dégonflage, alors que les histogrammes blancs, notés $F_2$ montrent les estimations après dégonflage.

Il ressort clairement de la figure 5 que l'histogramme de la roue avant gauche s'est décalé vers une estimation plus basse du rayon effectif, traduisant bien le dégonflage effectif du pneumatique. Cette variation de rayon effectif peut donc être détectée.

La figure 6 montre, de façon analogue, les histogrammes $G_1$ et $G_2$ correspondant respectivement à l'estimation du rayon effectif de la roue avant droite, avant et après dégonflage de la roue avant gauche. Il apparaît nettement que le dégonflage de la roue avant gauche n'a pas eu d'incidence sur l'estimation du rayon effectif de la roue avant droite.

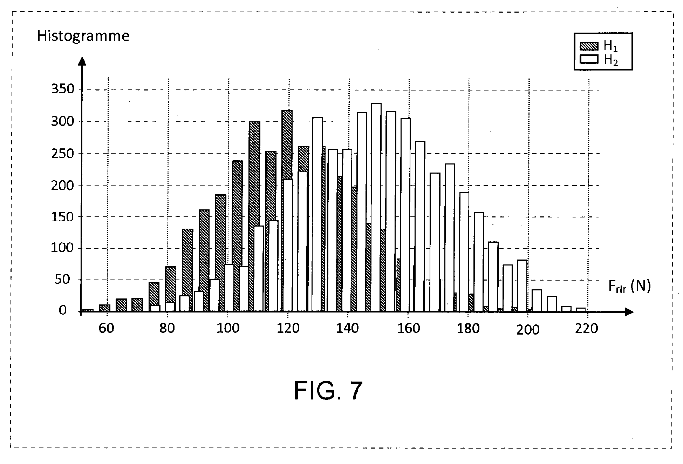

La figure 7 montre l'histogramme de la résistance au roulement estimée du train avant, où l'histogramme $H_1$ en gris correspond à la situation avant dégonflage, et l'histogramme $H_2$ en blanc à la situation après dégonflage. L'effet du dégonflage a eu comme conséquence le déplacement de l'histogramme vers les valeurs plus élevées de résistance au roulement, ce qui correspond effectivement à la conséquence de la réduction de pression dans l'un des pneumatiques du train avant.

La présente invention permet ainsi une estimation fiable de la résistance au roulement, ainsi que, dans la première variante de réalisation, de la vitesse longitudinale du véhicule, cette dernière estimation étant quasiment indépendante de l'état de pression des pneumatiques, tandis que la résistance au roulement est elle, au contraire, fortement dépendante de la pression des pneumatiques, ce qui serait en fait un moyen intéressant de surveillance de la pression des pneumatiques, et ceci à partir uniquement des valeurs estimées ou mesurées du couple à la roue et de la vitesse de rotation des roues.

La deuxième variante de mise en oeuvre de l'invention permet d'affiner la méthode de calcul puisque l'on considère alors le train moteur du véhicule, avec les couples pouvant être mesurés, et d'estimer les rayons effectifs de chaque roue.

Ainsi, il est possible de surveiller la pression des pneumatiques en utilisant l'estimation de la résistance au roulement donnée par la première variante de l'invention, ou en utilisant l'estimation de la résistance au roulement sur le train moteur avec les estimations des rayons effectifs de chaque roue de l'essieu, à l'aide la deuxième variante de mise en oeuvre de l'invention pour réduire les fausses alertes

**Revendications**

1. Méthode d'estimation de la résistance au roulement d'un train de roues d'un véhicule en mouvement et des rayons effectifs des roues dudit train, ledit véhicule étant muni d'au moins deux roues (1) équipées de pneumatiques, la méthode comprenant :

- la mesure ou l'estimation de la valeur de la vitesse angulaire $\Omega$ de rotation de chacune des roues (1) du train,
- la mesure ou l'estimation de la valeur du couple moteur $\tau$ appliqué au train de roues,

**caractérisée par le fait que** la méthode utilise un observateur de la dynamique de la roue basé sur la théorie des modes glissants dont les signaux d'entrée sont la valeur de la vitesse angulaire $\Omega$ de chaque roue (1) du train ainsi que la valeur du couple moteur $\tau$ appliqué au train de roues (1).

**2.** Méthode d'estimation de la résistance au roulement selon la revendication 1, **caractérisé en ce que** l'observateur utilise les équations suivantes appliquées à un train de roues (1) :

$$J_l \dot{\Omega}_l = \Gamma_l - R_l F_{xl} - C_f \Omega_l$$

$$J_r \dot{\Omega}_r = \Gamma_r - R_r F_{xr} - C_f \Omega_r$$

$$M_{1/2} \dot{v}_x = F_{xl} + F_{xr} - F_d - F_{rlr}$$

où les indices « l » et « r » identifiant respectivement la roue gauche et la roue droite, $\Omega$ est la vitesse angulaire de roue, R le rayon effectif, $v_x$ la vitesse linéaire du véhicule, $C_f$ le coefficient de frottement visqueux de la roue, J est l'inertie et $M_{1/2}$ la masse de la moitié du véhicule comprenant la carrosserie et le train considéré.

**3.** Véhicule automobile comportant un dispositif de surveillance de la pression des pneumatiques équipant les roues du véhicule, utilisant la variation de la résistance au roulement desdites roues comme indicateur de la variation de pression, caractérisé dans le fait que la résistance au roulement est estimée, en temps réel, à l'aide d'une méthode basée sur la théorie des modes glissants selon l'une des revendications 1 à 2.

**4.** Véhicule automobile selon la revendication précédente, **caractérisé en ce qu'**il comporte des moyens d'enregistrement et de comparaison de la résistance au roulement des roues du véhicule.

**Patentansprüche**

**1.** Verfahren zur Schätzung des Rollwiderstandes eines Fahrzeugradsatzes in Bewegung und der effektiven Radien der Räder des Satzes, wobei das Fahrzeug mit mindestens zwei Rädern (1) versehen ist, die mit Reifen ausgestattet sind, wobei das Verfahren Folgendes umfasst:

- Messen oder Schätzen des Werts der Winkelgeschwindigkeit $\Omega$ der Drehung jedes der Räder (1) des Satzes,
- Messen oder Schätzen des Werts des Motordrehmoments $\tau$, das auf den Radsatz aufgebracht wird,

**dadurch gekennzeichnet, dass** das Verfahren einen Beobachter der Dynamik des Rades auf der Basis der Sliding-Mode-Theorie verwendet, dessen Eingangssignale der Wert der Winkelgeschwindigkeit $\Omega$ jedes Rades (1) des Satzes sowie der Wert des Motordrehmoments $\tau$, das auf den Radsatz (1) aufgebracht wird, sind.

**2.** Verfahren zur Schätzung des Rollwiderstandes nach Anspruch 1, **dadurch gekennzeichnet, dass** der Beobachter die folgenden Gleichungen, angewendet auf einen Radsatz (1), verwendet:

$$J_l \dot{\Omega}_l = \Gamma_l - R_l F_{xl} - C_f \Omega_l$$

$$J_r \dot{\Omega}_r = \Gamma_r - R_r F_{xr} - C_f \Omega_r$$

$$M_{1/2}\dot{v}_x = F_{xl} + F_{xr} - F_d - F_{rlr}$$

worin die Indizes "l" und "r" für das linke Rad bzw. das rechte Rad stehen, $\Omega$ für die Winkelgeschwindigkeit des Rades steht, R für den effektiven Radius steht, $V_x$ für die lineare Geschwindigkeit des Fahrzeugs steht, $C_f$ für den Koeffizienten der viskosen Reibung des Rades steht, J für die Trägheit und $M_{1/2}$ für die Masse der Hälfte des Fahrzeugs, umfassend die Karosserie und den in Frage stehenden Satz, steht.

3. Kraftfahrzeug, umfassend eine Vorrichtung zur Überwachung des Drucks der Reifen, mit denen die Räder des Fahrzeugs ausgestattet sind, unter Verwendung der Änderung des Rollwiderstands der Räder als Indikator der Druckänderung, **dadurch gekennzeichnet, dass** der Rollwiderstand in Echtzeit mithilfe eines Verfahrens auf der Basis der Sliding-Mode-Theorie nach einem der Ansprüche 1 bis 2 geschätzt wird.

4. Kraftfahrzeug nach dem vorhergehenden Anspruch, **dadurch gekennzeichnet, dass** es Mittel zur Aufzeichnung und zum Vergleich des Rollwiderstandes der Räder des Fahrzeugs umfasst.

**Claims**

1. Method for estimating the rolling resistance of a wheelset of a moving vehicle and the effective radii of the wheels of said set, said vehicle having at least two wheels (1) fitted with tires, the method comprising the following steps:

   - measuring or estimating the value of the angular velocity $\Omega$ of the rotation of each of the wheels (1) of the set,
   - measuring or estimating the value of the engine torque $\tau$ applied to the wheelset,

   **characterized in that** the method uses an observer of the dynamic of the wheel that is based on the sliding mode control theory, in which the input signals are the value of the angular velocity $\Omega$ of each wheel (1) of the set and the value of the engine torque $\tau$ applied to the wheelset (1).

2. Method for estimating the rolling resistance according to Claim 1, **characterized in that** the observer uses the following equations applied to a set of wheels (1) :

$$J_l \dot{\Omega}_l = \Gamma_l - R_l F_{xl} - C_f \Omega_l$$

$$J_r \dot{\Omega}_r = \Gamma_r - R_r F_{xr} - C_f \Omega_r$$

$$M_{1/2}\dot{v}_x = F_{xl} + F_{xr} - F_d - F_{rlr}$$

   where "1" and "r" identify the left wheel and the right wheel respectively, $\Omega$ is the angular velocity of the wheel, R is the effective radius, $v_x$ is the linear velocity of the vehicle, $C_f$ is the coefficient of viscous friction of the wheel, J is the inertia and $M_{1/2}$ is the mass of the half of the vehicle comprising the body and the set in question.

3. Motor vehicle comprising a device for monitoring the pressure of the tires fitted to the vehicle wheels, using the variation of the rolling resistance of said wheels as an indicator of the variation of pressure, **characterized in that** the rolling resistance is estimated in real time with the aid of a method that is based on the sliding mode control theory according to either of Claims 1 and 2.

4. The motor vehicle according to the preceding claim, **characterized in that** it comprises means for recording and comparing the rolling resistance of the vehicle wheels.

FIG. 1

FIG. 2

FIG. 3

FIG. 4

Histogramme

FIG. 5

Histogramme

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010249527 A
- EP 0699546 A1
- US 4489598 A
- US 20080115563 A